# EUROPEAN PATENT APPLICATION

(11) **EP 4 787 969 A1**
(43) Date of publication of application: **05.08.2026**
(21) Application number: 23954315.0
(22) Date of filing: 28.09.2023
(51) Int. Cl.: H04W 36/24, H04W 24/04, H04W 24/10, H04W 36/36

(54) **TERMINAL AND WIRELESS COMMUNICATION METHOD**

(71) Applicant: NTT DOCOMO, INC., Tokyo 100-6150 (JP)
(72) Inventor: MIN Tianyang, Tokyo 100-6150 (JP); SAGAE Yuta, Tokyo 100-6150 (JP)
(74) Representative: Hoffmann Eitle
(86) International application number: PCT/JP2023/035517
(87) International publication number: WO 2025/069345

(57) **Abstract**

A terminal receives a configuration message regarding a conditional handover, and executes the conditional handover when an execution condition for the conditional handover is satisfied. The terminal determines whether the execution condition is satisfied based on a threshold of an altitude at which the terminal is located and a quality threshold of a candidate cell of a handover destination.

## Description

### TECHNICAL FIELD

The present disclosure relates to a terminal and a radio communication method to be mounted on a small uncrewed aerial vehicle.

### BACKGROUND ART

The 3rd Generation Partnership Project (3GPP: registered trademark) has specified the 5th generation mobile communication system (also referred to as 5G, New Radio (NR), or Next Generation (NG)), and is also proceeding with the specification of the next generation called Beyond 5G, 5G Evolution, or 6G.

For example, regarding support for small Uncrewed Aerial Vehicles (UAVs) such as drones equipped with radio communication modules similar to those of terminals (User Equipment, UE), introduction of measurement reporting (MR) according to the altitude of the UAV (UE) has been agreed upon (Non-Patent Literature 1).

In addition, for UAVs, functional enhancements of Conditional Handover (CHO), in which a terminal (User Equipment, UE) can execute a handover initiated by the terminal (User Equipment, UE) when a specific execution condition is satisfied, and Lower layer Triggered Mobility (LTM), which is a technology related to mobility of a terminal (User Equipment, UE) in Layer 1 or Layer 2, are also being studied (Non-Patent Literature 2).

### CITATION LIST

### NON-PATENT LITERATURE

Non-Patent Literature 1: "Report of 3GPP TSG RAN WG2 meeting #123, Toulouse, France", 3GPP, August 2023
Non-Patent Literature 2: "Moderator's summary for REL-19 RAN2 additional topics", RP-232627, 3GPP TSG-RAN Meeting #101, 3GPP, September 2023

### SUMMARY OF INVENTION

However, in the current CHO, the altitude at which the UAV (UE) is located and the flight path of the UAV (UE) are not considered at all, and there is a problem that it is difficult to apply the current provisions regarding CHO to the UAV (UE) as they are.

Therefore, the following disclosure has been made in view of such circumstances, and an object thereof is to provide a terminal and a radio communication method capable of realizing appropriate CHO according to the characteristics of a UAV.

One aspect of the present disclosure is a terminal including a reception unit configured to receive a configuration message regarding a conditional handover, and a control unit configured to execute the conditional handover when an execution condition for the conditional handover is satisfied, wherein the control unit determines whether the execution condition is satisfied based on a threshold of an altitude at which the terminal is located and a quality threshold of a candidate cell of a handover destination.

One aspect of the present disclosure is a terminal (UE 200) including a reception unit (control signal/reference signal processing unit 240) configured to receive a configuration message regarding a conditional handover, and a control unit (control unit 270) configured to execute the conditional handover when an execution condition for the conditional handover is satisfied, wherein the control unit determines whether the execution condition is satisfied based on information on a flight path of the terminal and a position of a candidate cell of a handover destination.

One aspect of the present disclosure is a terminal (UE 200) including a control unit (control unit 270) configured to execute a conditional handover when an execution condition for the conditional handover is satisfied, and a transmission unit (control signal/reference signal processing unit 240) configured to transmit information including an altitude at which the terminal is located and a quality of a cell or a beam to a network when the conditional handover fails or a radio link failure occurs.

One aspect of the present disclosure is a terminal (UE 200) including a control unit (control unit 270) configured to control cell transition of the terminal in accordance with mobility control by a lower layer, and a transmission unit (control signal/reference signal processing unit 240) configured to transmit a measurement report in the lower layer to a network, wherein the transmission unit transmits the measurement report including an altitude at which the terminal is located.

One aspect of the present disclosure is a terminal (UE 200) including a control unit (control unit 270) configured to control cell transition of the terminal in accordance with mobility control by a lower layer, and a transmission unit (control signal/reference signal processing unit 240) configured to transmit a measurement report in the lower layer to a network, wherein the transmission unit transmits the measurement report based on an altitude at which the terminal is located.

One aspect of the present disclosure is a terminal (UE 200) including a control unit (control unit 270) configured to control cell transition of the terminal in accordance with mobility control by a lower layer, and a transmission unit (control signal/reference signal processing unit 240) configured to transmit a measurement report in the lower layer to a network, wherein the control unit executes the cell transition based on information on a flight path of the terminal and a position of a candidate cell of a handover destination.

One aspect of the present disclosure is a terminal (UE 200) including a control unit (control unit 270) configured to control cell transition of the terminal in accordance with mobility control by a lower layer, and a transmission unit (control signal/reference signal processing unit 240) configured to transmit information including an altitude at which the terminal is located and a quality of a cell or a beam to a network when the cell transition fails or a radio link failure occurs.

### BRIEF DESCRIPTION OF DRAWINGS

[Fig. 1] Fig. 1 is an overall schematic configuration diagram of a radio communication system 10.
[Fig. 2] Fig. 2 is a diagram showing a configuration example of a radio frame, a subframe, and a slot used in the radio communication system 10.
[Fig. 3] Fig. 3 is a functional block configuration diagram of a gNB 100 and a UE 200.
[Fig. 4] Fig. 4 is a diagram showing an example of a basic communication sequence of CHO.
[Fig. 5] Fig. 5 is a diagram showing an example of a CHO execution condition according to Operation Example 1.
[Fig. 6] Fig. 6 is a diagram showing an example of a communication sequence (only a part thereof) related to L1 measurement reporting.
[Fig. 7] Fig. 7 is a diagram showing an example of a trigger condition for L1 measurement reporting according to Operation Example 2.
[Fig. 8] Fig. 8 is a diagram showing a setting example of a UE altitude and a Temporary Altitude Index according to Operation Example 3.
[Fig. 9] Fig. 9 is a diagram showing an example of flight path information of the UE 200 according to Operation Example 5.
[Fig. 10] Fig. 10 is a diagram showing an example of a trigger condition for CHO/LTM according to Operation Example 5.
[Fig. 11] Fig. 11 is a diagram showing an example of a sequence related to reporting of an RLF Report according to Operation Example 6.
[Fig. 12] Fig. 12 is a diagram showing an example of a hardware configuration of the gNB 100 and the UE 200.
[Fig. 13] Fig. 13 is a diagram showing a configuration example of a vehicle 2001.

### DESCRIPTION OF EMBODIMENTS

Hereinafter, embodiments will be described with reference to the drawings. Note that the same or similar functions and configurations are denoted by the same or similar reference signs, and descriptions thereof will be omitted as appropriate.

### (1) Overall Schematic Configuration of Radio Communication System

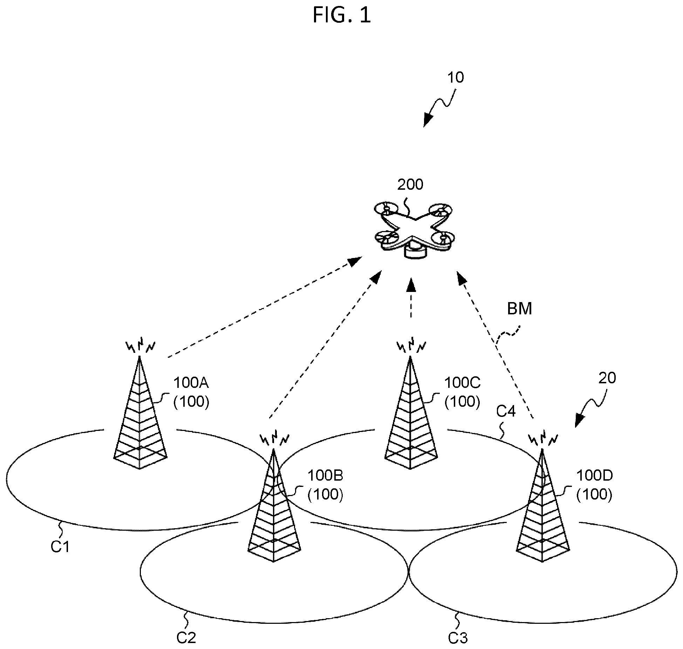

Fig. 1 is an overall schematic configuration diagram of a radio communication system 10 according to an embodiment. The radio communication system 10 is a radio communication system complying with 5G New Radio (NR), and includes a Next Generation-Radio Access Network 20 (hereinafter, NG-RAN 20) and a terminal 200 (hereinafter, UE 200).

Note that the radio communication system 10 may be a radio communication system complying with a scheme called Beyond 5G, 5G Evolution, or 6G.

The NG-RAN 20 includes a radio base station 100A (hereinafter, gNB 100A) to a radio base station 100D (hereinafter, gNB 100D). The gNB 100A to the gNB 100D have a cell C1 to a cell C4, respectively. Note that the specific configuration of the radio communication system 10 including the numbers of gNBs and UEs is not limited to the example shown in Fig. 1.

The NG-RAN 20 actually includes a plurality of NG-RAN Nodes, specifically, gNBs (or ng-eNBs), and is connected to a core network complying with 5G (5GC, not shown). Note that the NG-RAN 20 and the 5GC may be simply expressed as a "network".

The gNB 100A to the gNB 100D are radio base stations complying with 5G, and execute radio communication complying with 5G with the UE 200. The gNB 100A to the gNB 100D and the UE 200 can support Massive MIMO (Multiple-Input Multiple-Output) which generates a beam BM with higher directivity by controlling radio signals transmitted from a plurality of antenna elements, Carrier Aggregation (CA) which uses a plurality of component carriers (CCs) bundled together, Dual Connectivity (DC) which performs communication of two or more transport blocks simultaneously between the UE and each of two NG-RAN Nodes, and the like.

The UE 200 may be a UE mounted on a small uncrewed aerial vehicle (UAV: Uncrewed Aerial Vehicle or Unmanned Aerial Vehicle). The UE 200 mounted on the UAV or the UAV may be referred to as an NR drone. The UE 200 may be referred to as a normal UE, a vehicle UE, an Integrated Access and Backhaul (IAB) UE (including an aerial IAB UE), a High Altitude Platform Station (HAPS) UE, a Non Terrestrial Network (NTN) UE, or the like.

The gNB 100A to the gNB 100D (hereinafter, appropriately abbreviated as gNB 100) can transmit a plurality of beams having different transmission directions (which may be simply referred to as directions, radiation directions, coverage, or the like) by spatial and time division. Note that the gNB 100 may transmit a plurality of beams simultaneously.

In addition, the radio communication system 10 may correspond to a plurality of frequency ranges (FRs) shown below.

- FR1: 410 MHz to 7.125 GHz
- FR2-1: 24.25 GHz to 52.6 GHz

In FR1, a Sub-Carrier Spacing (SCS) of 15, 30, or 60 kHz is used, and a bandwidth (BW) of 5 to 100 MHz may be used. FR2-1 is a higher frequency than FR1, and an SCS of 60 or 120 kHz (240 kHz may be included) is used, and a bandwidth (BW) of 50 to 400 MHz may be used.

Note that SCS may be interpreted as numerology. Numerology is defined in 3GPP TS 38.300 and corresponds to one sub-carrier spacing in the frequency domain.

Furthermore, the radio communication system 10 also supports a frequency band higher than the frequency band of FR2-1. Specifically, the radio communication system 10 supports a frequency band exceeding 52.6 GHz and up to 71 GHz. Such a high frequency band may be referred to as FR2-2.

When a band exceeding 52.6 GHz is used, Cyclic Prefix-Orthogonal Frequency Division Multiplexing (CP-OFDM)/Discrete Fourier Transform-Spread (DFT-S-OFDM) having a larger SubCarrier Spacing (SCS) may be applied.

In a high frequency band such as FR2-2, an increase in phase noise between carriers becomes a problem as described above. Therefore, application of a larger (wider) SCS or a single carrier waveform may be required.

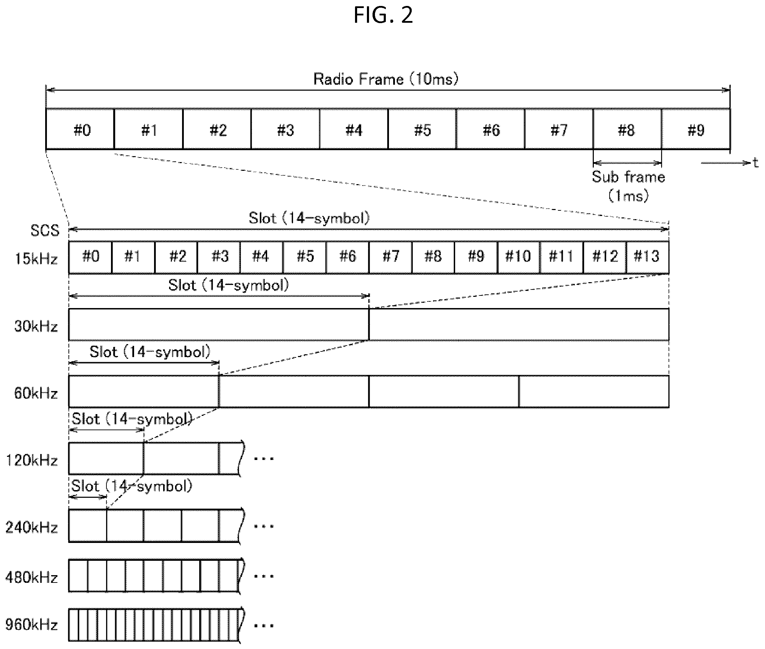

The larger the SCS, the shorter the symbol/CP (Cyclic Prefix) period and the slot period (when the configuration of 14 symbols/slot is maintained). Fig. 2 shows a configuration example of a radio frame, a subframe, and a slot used in the radio communication system 10.

When the configuration of 14 symbols/slot is maintained, the larger (wider) the SCS, the shorter the symbol period (and the slot period). Note that the symbol period may be referred to as a symbol length, a time direction, a time domain, or the like. In addition, the frequency direction may be referred to as a frequency domain, a resource block, a subcarrier, a BWP (Bandwidth part), or the like.

The frequency resource may include a component carrier (CC), a subcarrier, a resource block (RB), a resource block group (RBG), a BWP (Bandwidth part), and the like. The time resource may include a symbol, a slot, a mini-slot, a subframe, a radio frame, a DRX (Discontinuous Reception) cycle, and the like.

Note that the number of symbols constituting one slot is not necessarily 14 symbols (for example, 28 or 56 symbols). In addition, the number of slots per subframe may vary depending on the SCS.

In the radio communication system 10, an SSB (SS/PBCH Block) composed of a Synchronization Signal (SS) and a Physical Broadcast CHannel (PBCH) may be used.

The SSB is periodically transmitted from the network mainly for the UE 200 to execute detection of a cell ID and reception timing at the start of communication. In NR, the SSB is also used for reception quality measurement of each cell. As a transmission cycle (periodicity) of the SSB, 5, 10, 20, 40, 80, 160 milliseconds, or the like may be specified. Note that the UE 200 in initial access may assume a transmission cycle of 20 milliseconds.

The UE 200 transmits a measurement report (hereinafter, Measurement report) including reception quality regarding cells including a serving cell and a neighbor cell to the network. The procedure in which the UE 200 transmits the Measurement report may be referred to as Measurement reporting. The reception quality regarding the cell may include reception quality of a beam from the cell, or may include reception quality of the cell based on the beam from the cell.

The UE 200 may execute Measurement reporting periodically. The UE 200 may execute Measurement reporting for each event. An entering condition for starting Measurement reporting and a leaving condition for ending Measurement reporting may be defined for each event. Existing events may include the following events (see 3GPP TS 38.331).

### (i) Event A1

Event A1 is an event in which the reception quality of the serving cell becomes better than a threshold. For example, the entering condition is Ms - Hys > Thresh, and the leaving condition is Ms + Hys < Thresh.

Here, Ms is the reception quality of the serving cell, Hys is a hysteresis parameter, and Thresh is the threshold.

### (ii) Event A2

Event A2 is an event in which the reception quality of the serving cell becomes worse than a threshold. For example, the entering condition is Ms + Hys < Thresh, and the leaving condition is Ms - Hys > Thresh.

Here, Ms is the reception quality of the serving cell, Hys is a hysteresis parameter, and Thresh is the threshold.

### (iii) Event A3

Event A3 is an event in which the reception quality of the neighbor cell becomes better than the reception quality of the serving cell by an offset. For example, the entering condition is Mn + Ofn + Ocn - Hys > Mp + Ofp + Ocp + Off, and the leaving condition is Mn + Ofn + Ocn + Hys < Mp + Ofp + Ocp + Off.

Here, Mn is the reception quality of the neighbor cell, Ofn is an offset specific to a measurement object, and Ocn is an offset specific to the cell. Mp is the reception quality of the serving cell, Ofp is an offset specific to the measurement object, and Ocp is an offset specific to the cell. Hys is a hysteresis parameter, and Off is a parameter used in Event A3.

### (iv) Event A4

Event A4 is an event in which the reception quality of the neighbor cell becomes better than a threshold. For example, the entering condition is Mn + Ofn + Ocn - Hys > Thresh, and the leaving condition is Mn + Ofn + Ocn + Hys < Thresh.

Here, Mn is the reception quality of the neighbor cell, Ofn is an offset specific to the measurement object, and Ocn is an offset specific to the cell. Hys is a hysteresis parameter, and Thresh is the threshold.

### (v) Event A5

Event A5 is an event in which the reception quality of the serving cell becomes worse than a threshold, and the reception quality of the neighbor cell becomes better than a threshold. For example, the entering condition is Mp + Hys < Thresh1, and Mn + Ofn + Ocn - Hys > Thresh2, and the leaving condition is Mp - Hys > Thresh1, and Mn + Ofn + Ocn + Hys < Thresh2.

Here, Ms is the reception quality of the serving cell, Hys is a hysteresis parameter, and Thresh1 is the threshold. Mn is the reception quality of the neighbor cell, Ofn is an offset specific to the measurement object, and Ocn is an offset specific to the cell. Hys is a hysteresis parameter, and Thresh2 is the threshold.

### (vi) Event A6

Event A6 is an event in which the reception quality of the neighbor cell becomes better than the reception quality of an SCell (Secondary Cell) by an offset. For example, the entering condition is Mn + Ocn - Hys > Ms + Ocs + Off, and the leaving condition is Mn + Ocn + Hys < Ms + Ocs + Off.

Note that in addition to the events described above, an event regarding inter-RAT (Radio Access Technology) (for example, B1 (Inter RAT neighbour becomes better than threshold), B2 (Serving becomes worse than threshold1 and inter RAT neighbour becomes better than threshold2)) may be included.

Here, Mn is the reception quality of the neighbor cell, and Ocn is an offset specific to the cell. Ms is the reception quality of the SCell, and Ocs is an offset specific to the cell. Hys is a hysteresis parameter, and Off is a parameter used in Event A6.

Further, in the present embodiment, as described later, an event corresponding to the altitude at which the UE 200 is located (also simply referred to as the altitude of the UE 200) may be configured. The event may be a conditional event (CondEvent), and a plurality of thresholds (for example, H1, H2, H1 < H2) corresponding to the altitude of the UE 200 may be applied.

In addition, in the radio communication system 10, Conditional Handover (CHO) may be supported. In CHO, a candidate cell for handover and an execution condition for handover (which may also be referred to as transition) to the candidate cell are configured in advance for the UE 200.

Thereby, the UE 200 can perform a handover to a target radio base station (which may also be referred to as a target cell) without waiting for a handover command from the network.

CHO may be interpreted as a handover executed by the UE 200 when one or more execution conditions are satisfied. The UE 200 may start evaluation of the execution condition when receiving a CHO configuration, and stop the evaluation of the execution condition when a handover (legacy handover or conditional handover) is executed.

A candidate gNB or a potential target gNB may provide the CHO configuration to the UE 200. A source gNB may provide an execution condition such as a timing for triggering CHO to the UE 200. The execution condition may be composed of one or two or more trigger conditions.

Further, for evaluation of the CHO execution condition of the candidate cell, two or more different triggers, for example, RSRP (Reference Signal Received Power), RSRQ (Reference Signal Received Quality), SINR (Signal-to-Interference plus Noise power Ratio), and the like may be set simultaneously.

Note that in a case where CHO is configured in the UE 200 and the UE 200 receives another handover (HO) command from the gNB before the CHO execution condition is satisfied, the UE 200 may trigger the handover based on the received HO command and does not have to wait for the CHO condition to be satisfied. That is, a legacy HO configuration may be prioritized over the CHO configuration (if configured).

In the radio communication system 10, in addition to mobility management of the UE 200 by Layer 3 (for example, a Radio Resource Control layer (RRC) may be included) (which may be referred to as L3 Mobility), mobility management in Layer 1/Layer 2 (for example, a Medium Access Control layer (MAC) may be included) (which may be referred to as LTM or L1/L2 mobility) may be applied.

L3 Mobility may be interpreted as mobility control in the Radio Resource Control layer (RRC). On the other hand, LTM may be interpreted as mobility control in the Physical layer (PHY), the Medium Access Control layer (MAC), the Radio Link Control layer (RLC), and the Packet Data Convergence Protocol layer (PDCP).

### (2) Functional Block Configuration of Radio Communication System

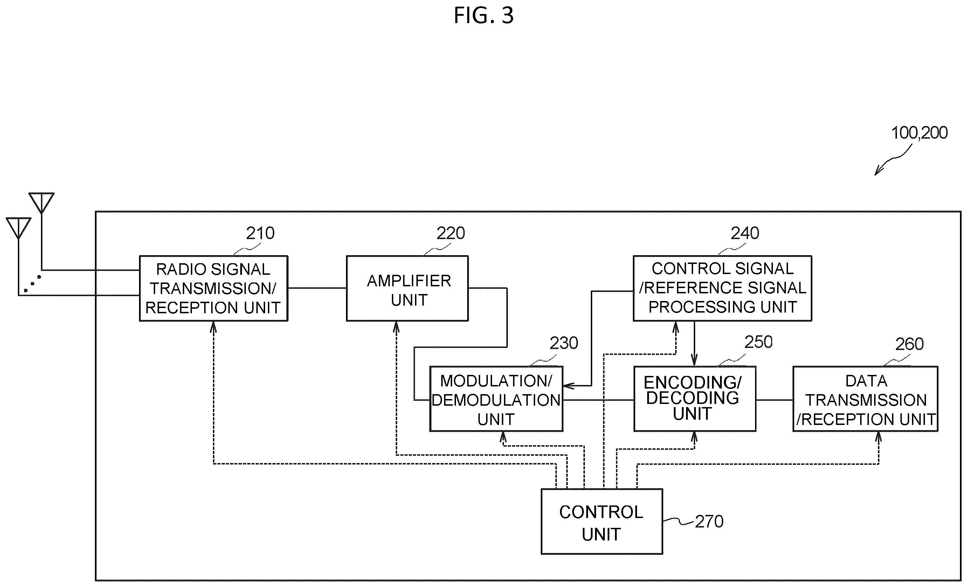

Next, a functional block configuration of the radio communication system 10 will be described. Specifically, a functional block configuration of the UE 200 will be described. Fig. 3 is a functional block configuration diagram of the gNB 100 and the UE 200.

As shown in Fig. 3, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260, and a control unit 270.

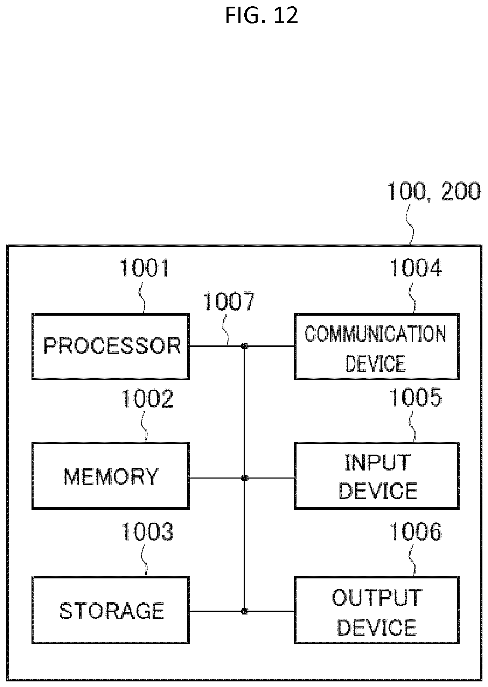

Note that Fig. 3 shows only main functional blocks related to the description of the embodiment, and it should be noted that the UE 200 (gNB 100) has other functional blocks (for example, a power supply unit and the like). Further, Fig. 3 shows a functional block configuration of the UE 200, and for a hardware configuration, refer to Fig. 12.

The radio signal transmission/reception unit 210 transmits and receives radio signals complying with NR. The radio signal transmission/reception unit 210 can support Massive MIMO which generates a beam with higher directivity by controlling radio (RF) signals transmitted from a plurality of antenna elements, Carrier Aggregation (CA) which uses a plurality of component carriers (CCs) bundled together, Dual Connectivity (DC) which performs communication simultaneously between the UE and each of two NG-RAN Nodes, and the like.

The amplifier unit 220 is composed of a PA (Power Amplifier)/LNA (Low Noise Amplifier) or the like. The amplifier unit 220 amplifies a signal output from the modulation/demodulation unit 230 to a predetermined power level. Further, the amplifier unit 220 amplifies an RF signal output from the radio signal transmission/reception unit 210.

The modulation/demodulation unit 230 executes data modulation/demodulation, transmission power setting, resource block allocation, and the like for each predetermined communication destination (gNB 100 or the like). In the modulation/demodulation unit 230, Cyclic Prefix-Orthogonal Frequency Division Multiplexing (CP-OFDM)/Discrete Fourier Transform-Spread (DFT-S-OFDM) may be applied. Further, DFT-S-OFDM may be used not only for Uplink (UL) but also for Downlink (DL).

The control signal/reference signal processing unit 240 executes processing regarding various control signals transmitted and received by the UE 200 and processing regarding various reference signals transmitted and received by the UE 200.

Specifically, the control signal/reference signal processing unit 240 receives various control signals transmitted from the gNB 100 via a predetermined control channel, for example, a control signal of a Radio Resource Control layer (RRC). Further, the control signal/reference signal processing unit 240 transmits various control signals to the gNB 100 via a predetermined control channel.

The control signal/reference signal processing unit 240 executes processing using a reference signal (RS) such as a Demodulation Reference Signal (DMRS) and a Tracking Reference Signal (TRS).

The DMRS is a known reference signal (pilot signal) between a terminal-specific base station and a terminal for estimating a fading channel used for data demodulation. The TRS is a reference signal used when tracking variations in time and frequency in downlink.

Note that the reference signal may include a Channel State Information-Reference Signal (CSI-RS), a Sounding Reference Signal (SRS), a Positioning Reference Signal (PRS) for position information, and the like, in addition to the DMRS and the TRS.

Further, the channel includes a control channel and a data channel. The control channel may include a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI), a Physical Broadcast Channel (PBCH), and the like.

Further, the data channel includes a PDSCH (Physical Downlink Shared Channel), a PUSCH (Physical Uplink Shared Channel), and the like. Data may mean data transmitted via the data channel.

The control signal/reference signal processing unit 240 may receive a configuration message regarding Conditional Handover (CHO). In the present embodiment, the control signal/reference signal processing unit 240 may constitute a reception unit configured to receive a configuration message regarding CHO. Specifically, the control signal/reference signal processing unit 240 may receive a reconfiguration message of the RRC layer (RRCReconfiguration) regarding CHO.

The control signal/reference signal processing unit 240 may transmit a measurement report including reception quality regarding cells including a serving cell and a neighbor cell to the network. Specifically, the control signal/reference signal processing unit 240 may transmit a Measurement report including reception quality (RSRP, RSRQ, SINR, etc.) of a cell and/or a beam to the gNB 100.

Further, when CHO fails or a Radio Link Failure (RLF) occurs, the control signal/reference signal processing unit 240 may transmit information including an altitude at which the UE 200 is located and a quality of a cell or a beam to the network. In the present embodiment, the control signal/reference signal processing unit 240 may constitute a transmission unit configured to transmit information including an altitude at which the UE 200 is located and a quality of a cell or a beam to the network.

Specifically, the control signal/reference signal processing unit 240 may transmit a UEInformationResponse including the altitude of the UE and the quality (RSRP, RSRQ, SINR, etc.) of the cell (or beam) to the gNB 100.

The control signal/reference signal processing unit 240 may transmit a measurement report (Measurement report) in a lower layer (L1/L2) to the network (gNB 100). In the present embodiment, the control signal/reference signal processing unit 240 may constitute a transmission unit configured to transmit a measurement report.

Specifically, the control signal/reference signal processing unit 240 may transmit a Measurement report including the altitude of the UE 200. The altitude may be an absolute value of a height from a reference plane to a position of the UE 200 (UAV), or may be indicated by an index associated with a range of altitude or the like. Further, the altitude may be an average altitude within a predetermined time, or may be a maximum (or minimum) altitude. The control signal/reference signal processing unit 240 may transmit a Measurement report including an altitude index associated with such an altitude of the UE 200 to the gNB 100.

Further, the control signal/reference signal processing unit 240 may transmit a Measurement report based on the altitude at which the UE 200 is located. The altitude may also be an absolute value of a height from a reference plane to a position of the UE 200 (UAV) or a range, as described above. Further, a plurality of altitude thresholds (H1, H2, etc.) may be set, and the Measurement report may be transmitted according to a relationship with the plurality of altitude thresholds (a specific example will be described later).

When cell transition by LTM or CHO fails or a Radio Link Failure (RLF) occurs, the control signal/reference signal processing unit 240 may transmit information including an altitude at which the UE 200 is located and a quality of a cell or a beam (RSRP, RSRQ, SINR, etc.) to the network.

Note that the network can configure Measurement reporting for causing the UE to report measurement results (Measurement results) for each SS/PBCH Block. The network may configure Measurement reporting for causing the UE to report Measurement results for each SS/PBCH Block(s), or may configure Measurement reporting for causing the UE to report Measurement results for each cell based on SS/PBCH Block(s). The network may configure Measurement reporting for causing the UE to report Measurement results for each CSI-RS resource, or may configure Measurement reporting for causing the UE to report Measurement results for each cell based on CSI-RS resources.

The control signal/reference signal processing unit 240 may transmit capability information of the UE 200 to the network. For example, the control signal/reference signal processing unit 240 can transmit UE Capability Information regarding the trigger condition for the measurement report and the altitude described above to the gNB 100. Particularly, in the present embodiment, the UE Capability Information may include a range of altitude at which the UE 200 can fly (or has a possibility of flying) (which may be a combination of a minimum altitude and a maximum altitude, or an average altitude).

The encoding/decoding unit 250 executes data segmentation/concatenation, channel coding/decoding, and the like for each predetermined communication destination (gNB 100 or other gNBs).

Specifically, the encoding/decoding unit 250 segments data output from the data transmission/reception unit 260 into a predetermined size, and executes channel coding on the segmented data. Further, the encoding/decoding unit 250 decodes data output from the modulation/demodulation unit 230, and concatenates the decoded data.

The data transmission/reception unit 260 executes transmission and reception of a Protocol Data Unit (PDU) and a Service Data Unit (SDU). Specifically, the data transmission/reception unit 260 executes assembly/disassembly of PDUs/SDUs and the like in a plurality of layers (a Medium Access Control layer (MAC), a Radio Link Control layer (RLC), a Packet Data Convergence Protocol layer (PDCP), and the like). Further, the data transmission/reception unit 260 executes data error correction and retransmission control based on a hybrid ARQ (Hybrid automatic repeat request).

The control unit 270 controls each functional block constituting the UE 200. Particularly, in the present embodiment, the control unit 270 can execute various controls considering the altitude of the UE 200 regarding CHO and LTM.

The control unit 270 can execute CHO when an execution condition (Execute condition) for Conditional Handover (CHO) is satisfied.

Further, the control unit 270 may control cell transition (handover) of the UE 200 in accordance with mobility control (LTM) by a lower layer (L1/L2).

Particularly, regarding CHO, the control unit 270 may determine whether the Execute condition is satisfied based on a threshold of an altitude at which the UE 200 is located and a quality threshold of a candidate cell of a handover destination.

Further, the control unit 270 may execute cell transition (handover) by LTM when an execution condition (Execute condition) based on a threshold of an altitude at which the UE 200 is located and a quality threshold of a candidate cell of a handover destination by LTM is satisfied.

The altitude threshold of the UE 200 may be single, or may be two or more. The quality threshold of the candidate cell may be interpreted as corresponding to any of the Events described above. Note that the quality of the candidate cell may be based on RSRP, RSRQ, SINR, or the like, as described above. The control unit 270 may determine whether the Execute condition is satisfied by adding a hysteresis parameter (Hys) to the altitude of the UE 200, the altitude threshold, and the quality threshold (Event). Note that a specific example of determining whether the Execute condition is satisfied will be described later.

The control unit 270 may determine whether the Execute condition is satisfied based on information on a flight path (flight path information) of the UE 200 and a position of a candidate cell of a handover destination by CHO. The information on the flight path (flight path information) of the UE 200 may include a plurality of waypoints, and may further include time information (time stamp) at the waypoints.

Further, the control unit 270 may execute cell transition (handover) based on the information on the flight path (flight path information) of the UE 200 and a position of a candidate cell of a handover destination by LTM.

The position of the candidate cell of the handover destination by CHO or LTM may be based on, for example, a physical distance between a waypoint of the UE 200 (UAV) and the candidate cell. The candidate cell may be based on a cell center, or may be based on a cell edge closest to the waypoint. Further, instead of using the waypoint as a reference, an arbitrary position on the flight path (which may be based on latitude/longitude information, or may be based on a cell center, etc.) may be used as a reference.

### (3) Operation of Radio Communication System

Next, the operation of the radio communication system 10 will be described. Specifically, operations related to CHO and LTM considering the altitude of the UE 200 (UAV) will be described.

### (3.1) Operation Example 1

In this operation example, CHO is triggered according to the altitude of the UE 200 (UAV). Specifically, a new execution condition may be introduced targeting CHO.

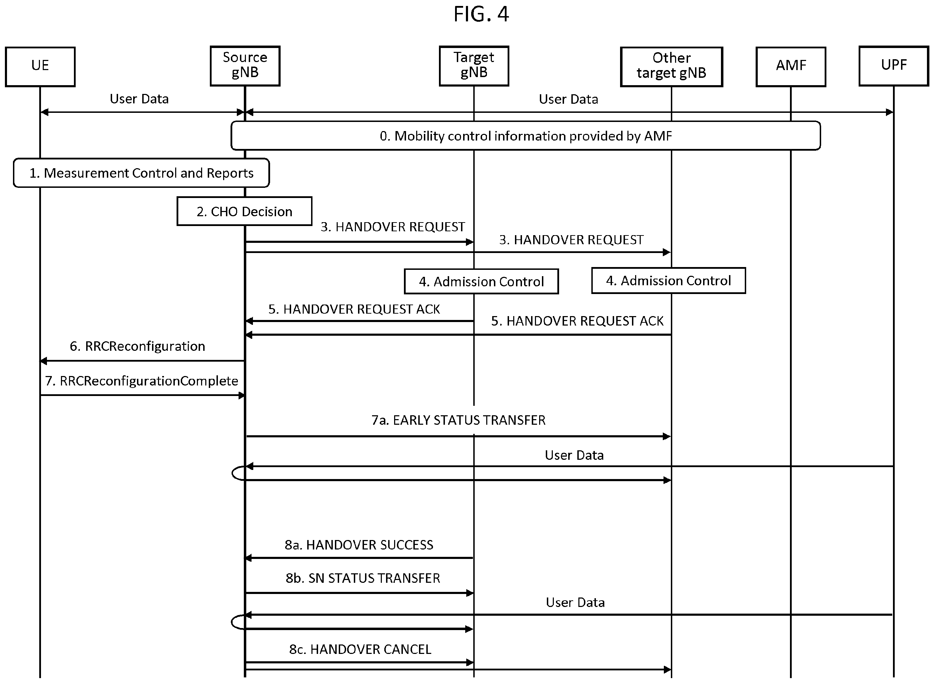

Fig. 4 is a diagram showing an example of a basic communication sequence of CHO. Specifically, the sequence shown in Fig. 4 is described in 3GPP TS 38.300 Chapter 9.2.3.4. As shown in Fig. 4, the UE 200 may evaluate an execution condition for CHO and determine whether to execute CHO.

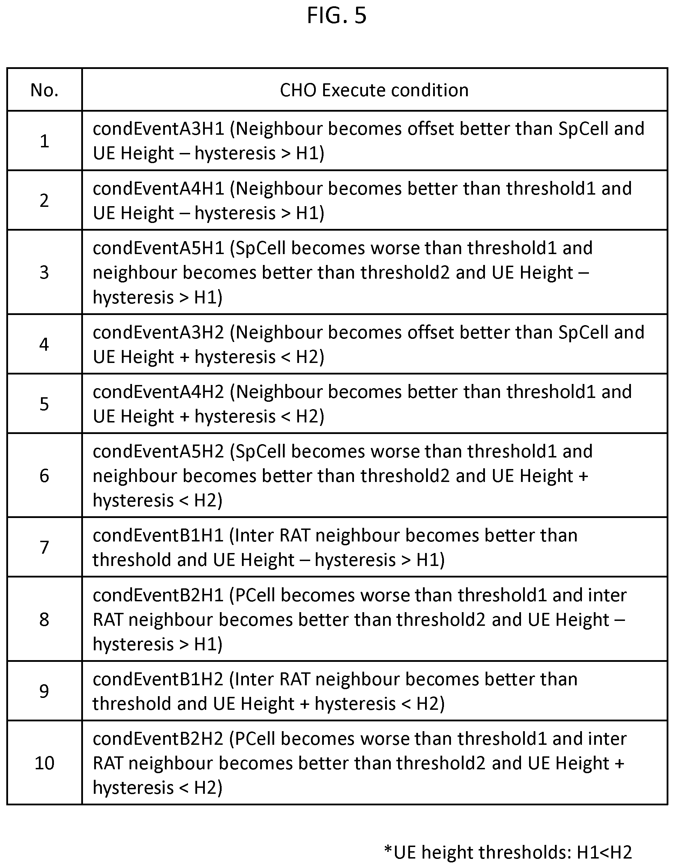

Fig. 5 is a diagram showing an example of a CHO execution condition according to Operation Example 1. If a new execution condition as shown in Fig. 5 is satisfied within a period of timeToTrigger, the UE 200 may execute CHO.

Specifically, the following execution conditions may be defined.

- condEventA3H1 (Neighbour becomes offset better than SpCell and UE Height - hysteresis > predetermined altitude threshold 1)
- condEventA4H1 (Neighbour becomes better than threshold1 and UE Height - hysteresis > predetermined altitude threshold 1)
- condEventA5H1 (SpCell becomes worse than threshold1 and neighbour becomes better than threshold2 and UE Height - hysteresis > predetermined altitude threshold 1)
- condEventA3H2 (Neighbour becomes offset better than SpCell and UE Height + hysteresis < predetermined altitude threshold 2)
- condEventA4H2 (Neighbour becomes better than threshold1 and UE Height + hysteresis < predetermined altitude threshold 2)
- condEventA5H2 (SpCell becomes worse than threshold1 and neighbour becomes better than threshold2 and UE Height + hysteresis < predetermined altitude threshold 2)
- condEventB1H1 (Inter RAT neighbour becomes better than threshold and UE Height - hysteresis > predetermined altitude threshold 1)
- condEventB2H1 (PCell becomes worse than threshold1 and inter RAT neighbour becomes better than threshold2 and UE Height - hysteresis > predetermined altitude threshold 1)
- condEventB1H2 (Inter RAT neighbour becomes better than threshold and UE Height + hysteresis < predetermined altitude threshold 2)
- condEventB2H2 (PCell becomes worse than threshold1 and inter RAT neighbour becomes better than threshold2 and UE Height + hysteresis < predetermined altitude threshold 2)
Note that predetermined altitude threshold 1 (H1) < predetermined altitude threshold 2 (H2) may be satisfied. Alternatively, predetermined altitude threshold 1 (H1) > predetermined altitude threshold 2 (H2) may be satisfied. Further, the SpCell may mean a Primary Cell (PCell) and a Primary Secondary Cell (PSCell). The PSCell may be interpreted as a component carrier that guarantees connection among component carriers supported by a secondary base station in DC or MR-DC, or a special SCell having a function equivalent to that of a PCell.

In the execution conditions described above, a hysteresis parameter (Hys) is applied, but the hysteresis parameter does not necessarily have to be applied. Further, the neighbor cell (neighbour) may be read as a candidate cell. Further, only some of the execution conditions described above may be applied, or an additional execution condition combining a plurality of execution conditions may be applied (the same applies to the following operation examples).

According to this operation example, since the CHO execution condition can be defined using a plurality of altitude thresholds, appropriate CHO according to the state (altitude) of the UE 200 (UAV), that is, the characteristics of the UAV, can be realized.

### (3.2) Operation Example 2

In this operation example, in LTM, L1 measurement reporting based on the altitude of the UE is triggered. In the legacy specification, L1 measurement reporting cannot report altitude information of the UE 200, and cannot trigger L1 measurement reporting according to the altitude of the UE.

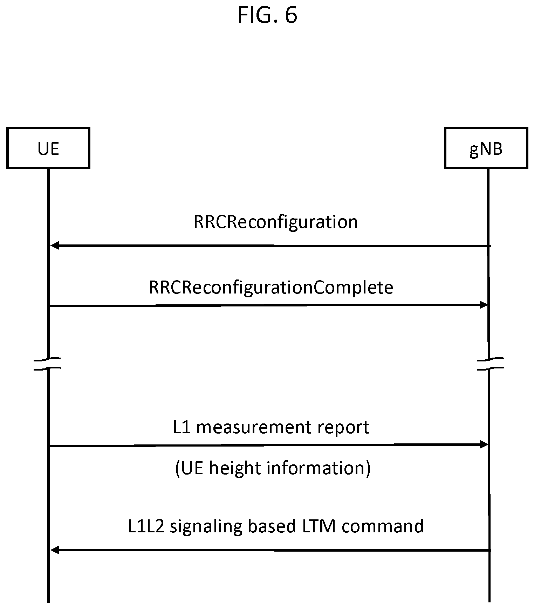

Fig. 6 is a diagram showing an example of a communication sequence (only a part thereof) related to L1 measurement reporting. As shown in Fig. 6, the UE 200 may execute configuration related to measurement of a serving cell and a neighbor cell (candidate cell) based on RRCReconfiguration, and may trigger L1 measurement reporting when a specific condition is satisfied.

In this operation example, altitude information may be introduced into L1 measurement reporting in LTM. That is, report contents included in L1 measurement reporting may include the state (altitude) of the UE 200 (UAV).

Further, the UE 200 may trigger L1 measurement reporting based on the current altitude of the UE 200 (UAV) (which may be referred to as Height based L1 measurement reporting).

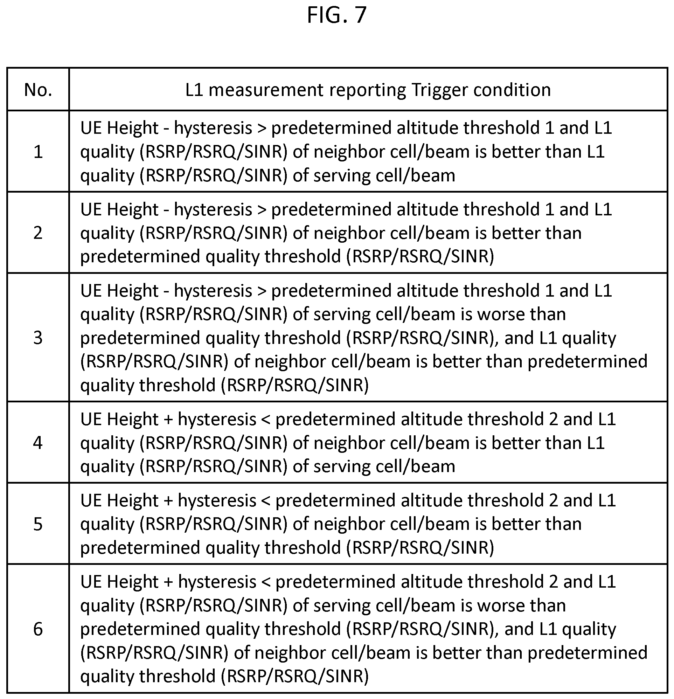

For example, the UE 200 may trigger L1 measurement reporting when the following conditions are satisfied:
- UE Height - hysteresis > predetermined altitude threshold 1
- UE Height + hysteresis < predetermined altitude threshold 2
- Combination of UE altitude condition and quality condition
   Fig. 7 is a diagram showing an example of a trigger condition for L1 measurement reporting according to Operation Example 2. When a new trigger condition as shown in Fig. 7 is satisfied, the UE 200 may execute L1 measurement reporting.

Note that in Fig. 7, the order of No. 1 to 6 may be changed. Further, the L1 reception quality may be RSRP/RSRQ/SINR of SSB or CSI-RS. CSI-RS based L1 measurement reporting may be simply referred to as CSI reporting.

Specifically, the following trigger conditions may be defined.

- UE Height - hysteresis > predetermined altitude threshold 1 and L1 quality (RSRP/RSRQ/SINR) of neighbor cell/beam is better than L1 quality (RSRP/RSRQ/SINR) of serving cell/beam
- UE Height - hysteresis > predetermined altitude threshold 1 and L1 quality (RSRP/RSRQ/SINR) of neighbor cell/beam is better than predetermined quality threshold (RSRP/RSRQ/SINR)
- UE Height - hysteresis > predetermined altitude threshold 1 and L1 quality (RSRP/RSRQ/SINR) of serving cell/beam is worse than predetermined quality threshold (RSRP/RSRQ/SINR), and L1 quality (RSRP/RSRQ/SINR) of neighbor cell/beam is better than predetermined quality threshold (RSRP/RSRQ/SINR)
- UE Height + hysteresis < predetermined altitude threshold 2 and L1 quality (RSRP/RSRQ/SINR) of neighbor cell/beam is better than L1 quality (RSRP/RSRQ/SINR) of serving cell/beam
- UE Height + hysteresis < predetermined altitude threshold 2 and L1 quality (RSRP/RSRQ/SINR) of neighbor cell/beam is better than predetermined quality threshold (RSRP/RSRQ/SINR)
- UE Height + hysteresis < predetermined altitude threshold 2 and L1 quality (RSRP/RSRQ/SINR) of serving cell/beam is worse than predetermined quality threshold (RSRP/RSRQ/SINR), and L1 quality (RSRP/RSRQ/SINR) of neighbor cell/beam is better than predetermined quality threshold (RSRP/RSRQ/SINR)

According to this operation example, since the trigger condition for L1 measurement reporting can be defined using a plurality of altitude thresholds, appropriate LTM according to the state (altitude) of the UE 200 (UAV), that is, the characteristics of the UAV, can be realized.

### (3.3) Operation Example 3

In this operation example, in L1 measurement reporting, the altitude of the UE 200 (UAV) may be reported to the network. Specifically, L1 measurement reporting may be executed using an index associated with the altitude of the UE 200 (referred to as a Temporary Altitude Index).

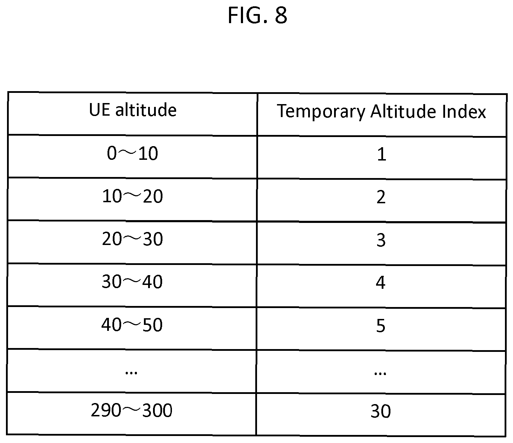

Fig. 8 is a diagram showing a setting example of a UE altitude and a Temporary Altitude Index according to Operation Example 3. As shown in Fig. 8, the altitude of the UE 200 (here, 0 m to 300 m is assumed) may be divided every 10 m, and indices 1 to 30 may be sequentially associated from a low altitude division.

L1 measurement reporting may be transmitted repeatedly at appropriate timings, and each time L1 measurement reporting is performed, an index associated with the altitude of the UE 200 at that time may be included in the L1 measurement reporting. That is, the index may be dynamically changed according to the current altitude of the UE 200.

The correspondence relationship (mapping) between the UE altitude and the Temporary Altitude Index may be configured in advance from the gNB 100 to the UE 200 by a higher layer (for example, RRC). Further, the correspondence relationship may be changed autonomously based on the current altitude of the UE 200 and/or flight path information, or dynamically by an instruction from the network.

According to this operation example, since the altitude of the UE 200 (UAV) can be reported to the network in L1 measurement reporting, the network can apply appropriate resource configuration and the like according to the altitude of the UE 200 to the UE 200. In addition, since L1 measurement reporting is executed by PUCCH or MAC CE, although encryption is applied, it cannot be said that sufficient security such as integrity is ensured; however, since the content of L1 measurement reporting is dynamically changed by the Temporary Altitude Index, it can also contribute to improvement of the security level.

### (3.4) Operation Example 4

In this operation example, LTM corresponding to the altitude of the UE 200 is triggered. Such LTM triggering may be referred to as Height based LTM triggering.

Specifically, similarly to Operation Example 2, when a new trigger condition as shown in Fig. 7 is satisfied, the UE 200 may execute LTM.

Note that as described above, in Fig. 7, the order of No. 1 to 6 may be changed. Further, the L1 reception quality may be RSRP/RSRQ/SINR of SSB or CSI-RS. CSI-RS based L1 measurement reporting may be simply referred to as CSI reporting.

Specifically, the following trigger conditions may be defined.

- UE Height - hysteresis > predetermined altitude threshold 1 and L1 quality (RSRP/RSRQ/SINR) of neighbor cell/beam is better than L1 quality (RSRP/RSRQ/SINR) of serving cell/beam
- UE Height - hysteresis > predetermined altitude threshold 1 and L1 quality (RSRP/RSRQ/SINR) of neighbor cell/beam is better than predetermined quality threshold (RSRP/RSRQ/SINR)
- UE Height - hysteresis > predetermined altitude threshold 1 and L1 quality (RSRP/RSRQ/SINR) of serving cell/beam is worse than predetermined quality threshold (RSRP/RSRQ/SINR), and L1 quality (RSRP/RSRQ/SINR) of neighbor cell/beam is better than predetermined quality threshold (RSRP/RSRQ/SINR)
- UE Height + hysteresis < predetermined altitude threshold 2 and L1 quality (RSRP/RSRQ/SINR) of neighbor cell/beam is better than L1 quality (RSRP/RSRQ/SINR) of serving cell/beam
- UE Height + hysteresis < predetermined altitude threshold 2 and L1 quality (RSRP/RSRQ/SINR) of neighbor cell/beam is better than predetermined quality threshold (RSRP/RSRQ/SINR)
- UE Height + hysteresis < predetermined altitude threshold 2 and L1 quality (RSRP/RSRQ/SINR) of serving cell/beam is worse than predetermined quality threshold (RSRP/RSRQ/SINR), and L1 quality (RSRP/RSRQ/SINR) of neighbor cell/beam is better than predetermined quality threshold (RSRP/RSRQ/SINR)

According to this operation example, since the trigger condition for LTM can be defined using a plurality of altitude thresholds, appropriate LTM according to the state (altitude) of the UE 200 (UAV), that is, the characteristics of the UAV, can be realized.

### (3.5) Operation Example 5

In this operation example, CHO or LTM may be triggered (executed) based on the flight path of the UE 200 (UAV). As described above, the information on the flight path may be referred to as flight path information, or may be referred to as route information or the like.

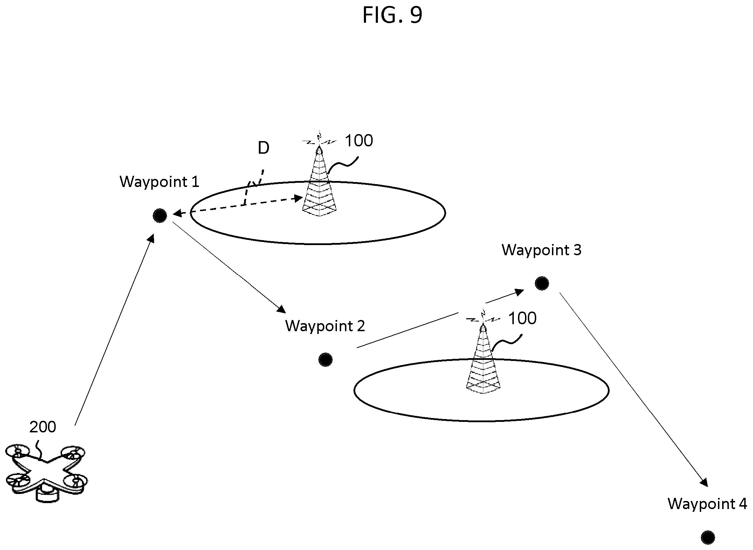

Fig. 9 is a diagram showing an example of flight path information of the UE 200 according to Operation Example 5. As shown in Fig. 9, in CHO/LTM, the UE 200 may determine execution of CHO/LTM considering a position on the flight path of the UE 200 and a distance D from a candidate cell. As described above, the distance D may be based on the cell center of the candidate cell, or may be based on the cell edge closest to the waypoint. Further, instead of using the waypoint as a reference, an arbitrary position on the flight path (which may be based on latitude/longitude information, or may be based on a cell center, etc.) may be used as a reference.

When the gNB 100 configures a candidate target cell config in the UE 200, the gNB 100 may configure position information of the candidate target cell. The UE 200 may determine whether to execute CHO/LTM considering the distance D between a waypoint of the flight path information of the UE 200 and the candidate target cell.

Specifically, a new execution condition (condEventF1) may be configured. Alternatively, the UE 200 may execute CHO/LTM when the distance D between the waypoint of the flight path information of the UE 200 and the candidate target cell becomes smaller than a predetermined threshold.

The new execution condition described above may be combined with a height execution condition or a quality execution condition. For example, if the distance D between the waypoint of the flight path information of the UE 200 and the candidate target cell is smaller than a predetermined threshold and event A3 is satisfied within a period of timeToTrigger, CHO/LTM may be executed.

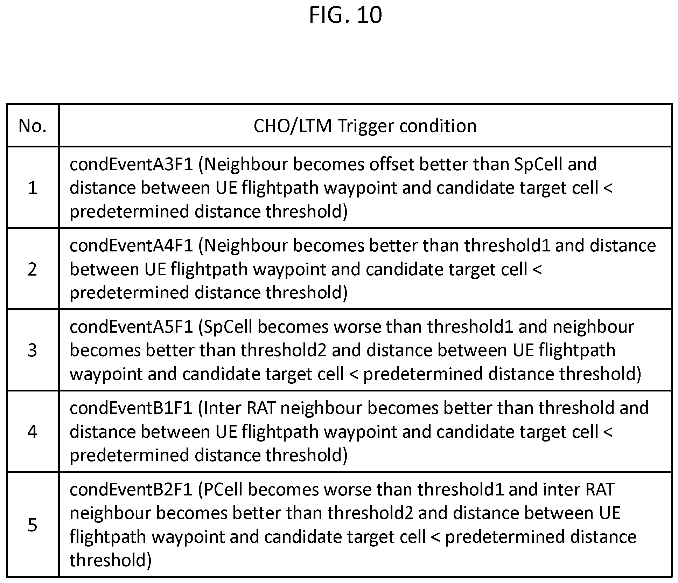

Alternatively, a new execution condition (condEventA3F1, condEventA4F1, condEventA5F1, condEventB1F1, condEventB2F1) may be configured. When satisfying the execution condition, the UE 200 may execute CHO/LTM (refer to Fig. 10 for details).

Further, the UE 200 may execute CHO/LTM when the distance D between the waypoint of the flight path information of the UE 200 and the candidate target cell is smaller than a predetermined threshold, and a new event is satisfied (for example, L1 quality (RSRP/RSRQ/SINR) of neighbor cell/beam is better than L1 quality (RSRP/RSRQ/SINR) of serving cell/beam).

Fig. 10 is a diagram showing an example of a trigger condition for CHO/LTM according to Operation Example 5. When a new trigger condition as shown in Fig. 10 is satisfied, the UE 200 may execute CHO/LTM. Note that in Fig. 10, the order of No. 1 to 5 may be changed.

Specifically, the following trigger conditions may be defined.

- condEventA3F1 (Neighbour becomes offset better than SpCell and distance between UE flightpath waypoint and candidate target cell < predetermined distance threshold)
- condEventA4F1 (Neighbour becomes better than threshold1 and distance between UE flightpath waypoint and candidate target cell < predetermined distance threshold)
- condEventA5F1 (SpCell becomes worse than threshold1 and neighbour becomes better than threshold2 and distance between UE flightpath waypoint and candidate target cell < predetermined distance threshold)
- condEventB1F1 (Inter RAT neighbour becomes better than threshold and distance between UE flightpath waypoint and candidate target cell < predetermined distance threshold)
- condEventB2F1 (PCell becomes worse than threshold1 and inter RAT neighbour becomes better than threshold2 and distance between UE flightpath waypoint and candidate target cell < predetermined distance threshold)

According to this operation example, since CHO or LTM is triggered based on the flight path of the UE 200 (UAV), more appropriate CHO or LTM according to the position including the altitude of the UE 200 can be realized.

### (3.6) Operation Example 6

In this operation example, when the UE 200 (UAV) fails in handover (HO) or when a Radio Link Failure (RLF) occurs, the UE 200 may transmit a report (RLF report) including the altitude of the UE 200 and the like to the gNB 100.

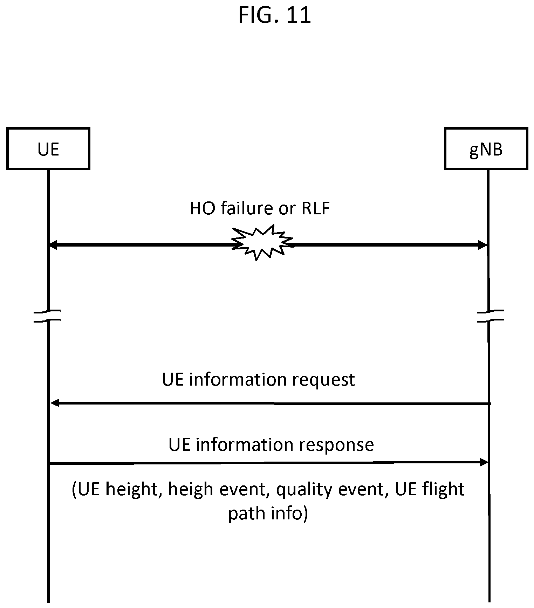

Fig. 11 is a diagram showing an example of a sequence related to reporting of an RLF Report according to Operation Example 6. Specifically, when HO failure or RLF occurs, the UE 200 may record the following information and report the information to the gNB 100 using UEInformationResponse. Alternatively, the UE 200 may include the following information in a successful handover report.

- Altitude of UE, and quality (RSRP/RSRQ/SINR) of serving or neighbor cell/beam at the altitude
- In the case of CHO/LTM, altitude of UE when height event (or condEventF1) was satisfied
- In the case of CHO/LTM, regarding condEventA3H1, condEventA3H2, condEventA4H1, condEventA4H2, condEventA5H1, condEventA5H2, condEventB1H1, condEventB1H2, condEventB2H1, condEventB2H2, information indicating whether height condition and quality condition (event A3/A4/A5/B1/B2) were satisfied simultaneously, information indicating that only height condition was satisfied and quality condition (event A3/A4/A5/B1/B2) was not satisfied, or information indicating that only quality condition (event A3/A4/A5) was satisfied and height condition was not satisfied
- In the case of CHO/LTM, quality (RSRP/RSRQ/SINR) of serving or neighbor cell/beam when height condition or quality condition (event A3/A4/A5/B1/B2) was satisfied
- Time taken until quality condition (event A3/A4/A5/B1/B2) was satisfied after height condition was satisfied if height condition was satisfied first, or time taken until height condition was satisfied after quality condition was satisfied if quality condition (event A3/A4/A5/B1/B2) was satisfied first
- Flight path information of UE
- In the case of CHO/LTM, regarding condEventA3F1, condEventA4F1, condEventA5F1, condEventB1F1, condEventB2F1, information indicating whether flight path condition and quality condition (event A3/A4/A5/B1/B2) were satisfied simultaneously, information indicating that only flight path condition was satisfied and quality condition (event A3/A4/A5/B1/B2) was not satisfied, or information indicating that only quality condition (event A3/A4/A5/B1/B2) was satisfied and flight path condition was not satisfied
- In the case of CHO/LTM, quality (RSRP/RSRQ/SINR) of serving or neighbor cell/beam when flight path condition or quality condition (event A3/A4/A5/B1/B2) was satisfied
- Time taken until quality condition (event A3/A4/A5/B1/B2) was satisfied after flight path condition was satisfied if flight path condition was satisfied first, or time taken until flight path condition was satisfied after quality condition was satisfied if quality condition (event A3/A4/A5/B1/B2) was satisfied first
- Distance D between waypoint and candidate target cell at the time of RLF/HO failure

According to this operation example, when the UE 200 (UAV) fails in handover (HO) or when a Radio Link Failure (RLF) occurs, the UE 200 transmits a report (RLF report) including the altitude of the UE 200 and the like to the gNB 100, so that the network can contribute to improvement of communication quality considering the altitude of the UE 200.

### (4) Other Embodiments

Although the contents of the present invention have been described by way of the embodiments, it is obvious to those skilled in the art that the present invention is not limited to what is written here and that various modifications and improvements thereof are possible.

For example, in the above-described embodiment, it is assumed that the UE is mounted on a UAV, but the UE does not necessarily have to be mounted on a UAV. That is, similar operations may be applied when the UE is temporarily or permanently located at a position with good line of sight.

In the above description, configuration, activation, update, indication, enable, specify, and selection can be read as each other. Similarly, link, associate, correspond, and map can be read as each other, and allocate, assign, monitor, and map can be read as each other.

Further, specific, dedicated, UE-specific, and UE-dedicated can be read as each other. Similarly, common, shared, group-common, UE-common, and UE-shared can be read as each other.

In the present disclosure, terms such as "precoding", "precoder", "weight (precoding weight)", "Quasi-Co-Location (QCL)", "Transmission Configuration Indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

The block configuration diagram (Fig. 3) used for the description of the above-described embodiment shows blocks of functional units. Those functional blocks (structural components) can be realized by a desired combination of at least one of hardware and software. Means for realizing each functional block is not particularly limited. That is, each functional block may be realized by using a single device physically or logically coupled, or by connecting two or more devices physically or logically separated directly or indirectly (for example, using a wired scheme, a wireless scheme, etc.) and using the plurality of devices. The functional blocks may be realized by combining software with the one device or the plurality of devices.

Functions include judging, determining, calculating, computing, processing, deriving, investigating, looking up, search, inquiry, ascertaining, receiving, transmitting, output, accessing, resolving, selecting, choosing, establishing, comparing, assuming, expecting, considering, broadcasting, notifying, communicating, forwarding, configuring, reconfiguring, allocating (mapping), assigning, and the like, but are not limited thereto. For example, a functional block (component) that functions transmission is called a transmitting unit or a transmitter. As described above, the method of realization is not particularly limited for any of them.

Further, the gNB 100 and the UE 200 (the device) described above may function as a computer that performs processing of the radio communication method of the present disclosure. Fig. 12 is a diagram showing an example of a hardware configuration of the device. As shown in Fig. 12, the device may be configured as a computer device including a processor 1001, a memory 1002, a storage 1003, a communication device 1004, an input device 1005, an output device 1006, a bus 1007, and the like.

Note that in the following description, the term "device" can be read as a circuit, device, unit, or the like. The hardware configuration of the device may be configured to include one or a plurality of the devices shown in the figure, or may be configured without including some of the devices.

Each functional block of the device (see Fig. 3) is realized by any hardware element of the computer device or a combination of the hardware elements.

Further, each function in the device is realized by the processor 1001 performing calculation by reading predetermined software (program) onto hardware such as the processor 1001 and the memory 1002, controlling communication by the communication device 1004, or controlling at least one of reading and writing of data in the memory 1002 and the storage 1003.

The processor 1001 controls the entire computer by operating an operating system, for example. The processor 1001 may be configured by a Central Processing Unit (CPU) including an interface with peripheral devices, a control device, an arithmetic device, a register, and the like.

Further, the processor 1001 reads a program (program code), a software module, data, and the like from at least one of the storage 1003 and the communication device 1004 to the memory 1002, and executes various processes according to them. As the program, a program causing a computer to execute at least a part of the operations described in the above-described embodiment is used. Furthermore, the various processes described above may be executed by one processor 1001, or may be executed simultaneously or sequentially by two or more processors 1001. The processor 1001 may be implemented by one or more chips. Note that the program may be transmitted from a network via a telecommunication line.

The memory 1002 is a computer-readable recording medium, and may be configured by at least one of, for example, a Read Only Memory (ROM), an Erasable Programmable ROM (EPROM), an Electrically Erasable Programmable ROM (EEPROM), a Random Access Memory (RAM), and the like. The memory 1002 may be referred to as a register, a cache, a main memory (main storage device), or the like. The memory 1002 can store a program (program code), a software module, and the like capable of executing the method according to the embodiment of the present disclosure.

The storage 1003 is a computer-readable recording medium, and may be configured by at least one of, for example, an optical disk such as a Compact Disc ROM (CD-ROM), a hard disk drive, a flexible disk, a magneto-optical disk (for example, a compact disk, a digital versatile disk, a Bluray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium described above may be, for example, a database, a server, or other appropriate media including at least one of the memory 1002 and the storage 1003.

The communication device 1004 is hardware (transceiver device) for performing communication between computers via at least one of a wired network and a wireless network, and is also referred to as, for example, a network device, a network controller, a network card, a communication module, or the like.

The communication device 1004 may be configured to include a high-frequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, etc.) that accepts input from the outside. The output device 1006 is an output device (for example, a display, a speaker, an LED lamp, etc.) that performs output to the outside. Note that the input device 1005 and the output device 1006 may have an integrated configuration (for example, a touch panel).

Further, each device such as the processor 1001 and the memory 1002 is connected by a bus 1007 for communicating information. The bus 1007 may be configured using a single bus, or may be configured using a different bus for each device.

Furthermore, the device may be configured to include hardware such as a microprocessor, a Digital Signal Processor (DSP), an Application Specific Integrated Circuit (ASIC), a Programmable Logic Device (PLD), and a Field Programmable Gate Array (FPGA), and a part or all of each functional block may be realized by the hardware. For example, the processor 1001 may be implemented using at least one of these hardware components.

Further, the notification of information is not limited to the aspect/embodiment described in the present disclosure, and may be performed using other methods. For example, the notification of information may be performed by physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB))), other signals, or a combination thereof. Further, RRC signaling may be referred to as an RRC message, and may be, for example, an RRC Connection Setup message, an RRC Connection Reconfiguration message, or the like.

3rd Generation Partnership Project (3GPP (R)) specifies 5th generation mobile communication system (5G, also called New Radio (NR) or Next Generation (NG), further, a succeeding system called Beyond 5G, 5G Evolution or 6G is being specified.

The processing procedures, sequences, flowcharts, etc. of each aspect/embodiment described in the present disclosure may be reordered as long as there is no contradiction. For example, for the methods described in the present disclosure, elements of various steps are presented using an exemplary order, and are not limited to the specific order presented.

The specific operation performed by the base station in the present disclosure may be performed by its upper node in some cases. In a network consisting of one or a plurality of network nodes having a base station, it is obvious that various operations performed for communication with a terminal can be performed by at least one of the base station and other network nodes other than the base station (for example, MME or S-GW is considered, but not limited thereto). Although the case where there is one other network node other than the base station has been illustrated above, it may be a combination of a plurality of other network nodes (for example, MME and S-GW).

Information, signals (information, etc.) can be output from a higher layer (or lower layer) to a lower layer (or higher layer). It may be input and output via a plurality of network nodes.

The input/output information may be stored in a specific location (for example, a memory) or may be managed using a management table. The input/output information may be overwritten, updated, or appended. The output information may be deleted. The input information may be transmitted to other devices.

The determination may be performed by a value represented by 1 bit (0 or 1), may be performed by a Boolean value (Boolean: true or false), or may be performed by comparison of numerical values (for example, comparison with a predetermined value).

Each aspect/embodiment described in the present disclosure may be used alone, may be used in combination, or may be switched and used in accordance with execution. Further, notification of predetermined information (for example, notification of "being X") is not limited to being performed explicitly, but may be performed implicitly (for example, not notifying the predetermined information).

Software should be broadly interpreted to mean instructions, instruction sets, codes, code segments, program codes, programs, subprograms, software modules, applications, software applications, software packages, routines, subroutines, objects, executable files, execution threads, procedures, functions, and the like, regardless of whether it is referred to as software, firmware, middleware, microcode, hardware description language, or other names.

Further, software, instructions, information, and the like may be transmitted and received via a transmission medium. For example, when software is transmitted from a website, a server, or other remote sources using at least one of wired technologies (coaxial cable, optical fiber cable, twisted pair, Digital Subscriber Line (DSL), etc.) and wireless technologies (infrared, microwave, etc.), at least one of these wired technologies and wireless technologies is included within the definition of the transmission medium.

Information, signals, and the like described in the present disclosure may be represented using any of various different technologies. For example, data, instructions, commands, information, signals, bits, symbols, chips, and the like that may be referred to throughout the above description may be represented by voltage, current, electromagnetic waves, magnetic fields or magnetic particles, light fields or photons, or any combination thereof.

Note that terms described in the present disclosure and terms necessary for understanding the present disclosure may be replaced with terms having the same or similar meanings. For example, at least one of a channel and a symbol may be a signal (signaling). Further, the signal may be a message. Further, a Component Carrier (CC) may be referred to as a carrier frequency, a cell, a frequency carrier, or the like.

The terms "system" and "network" used in the present disclosure are used interchangeably.

Further, information, parameters, and the like described in the present disclosure may be represented using absolute values, may be represented using relative values from predetermined values, or may be represented using other corresponding information. For example, radio resources may be indicated by an index.

The names used for the parameters described above are not limiting names in any respect. Furthermore, mathematical formulas and the like using these parameters may differ from those explicitly disclosed in the present disclosure. Since various channels (for example, PUCCH, PDCCH, etc.) and information elements can be identified by any suitable names, the various names assigned to these various channels and information elements are not limiting names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may be referred to by terms such as macro cell, small cell, femto cell, pico cell, and the like.

The base station can accommodate one or a plurality of (for example, three) cells (also referred to as sectors). When the base station accommodates a plurality of cells, the entire coverage area of the base station can be divided into a plurality of smaller areas, and each smaller area can also provide communication services by a base station subsystem (for example, a Remote Radio Head (RRH) for indoor use).

The term "cell" or "sector" refers to a part or the whole of the coverage area of at least one of the base station and the base station subsystem that performs communication services in this coverage.

In the present disclosure, the base station transmitting information to the terminal may be read as the base station instructing the terminal to perform control/operation based on the information.

In the present disclosure, terms such as "Mobile Station (MS)", "user terminal", "User Equipment (UE)", and "terminal" can be used interchangeably.

The mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmitting device, a receiving device, a communication device, or the like. Note that at least one of the base station and the mobile station may be a device mounted on a moving body, the moving body itself, or the like. The moving body refers to a movable object, and the moving speed is arbitrary. It also naturally includes the case where the moving body is stopped. The moving body includes, for example, a vehicle, a transport vehicle, an automobile, a motorcycle, a bicycle, a connected car, an excavator, a bulldozer, a wheel loader, a dump truck, a forklift, a train, a bus, a rear car, a rickshaw, a ship and other watercraft, an airplane, a rocket, an artificial satellite, a drone (registered trademark), a multicopter, a quadcopter, a balloon, and objects mounted thereon, but is not limited thereto. Further, the moving body may be a moving body that autonomously travels based on an operation command. It may be a vehicle (for example, a car, an airplane, etc.), an uncrewed moving body (for example, a drone, a self-driving car, etc.), or a robot (manned or unmanned). Note that at least one of the base station and the mobile station also includes a device that does not necessarily move during communication operation. For example, at least one of the base station and the mobile station may be an IoT (Internet of Things) device such as a sensor.

Further, the base station in the present disclosure may be read as a mobile station (user terminal, hereinafter the same). For example, each aspect/embodiment of the present disclosure may be applied to a configuration in which communication between a base station and a mobile station is replaced with communication between a plurality of mobile stations (for example, may be referred to as Device-to-Device (D2D), Vehicle-to-Everything (V2X), etc.). In this case, the mobile station may have the functions of the base station. Further, words such as "uplink" and "downlink" may be replaced with words corresponding to inter-terminal communication (for example, "side"). For example, an uplink channel, a downlink channel, and the like may be read as a side channel (or sidelink).

Similarly, the mobile station in the present disclosure may be read as a base station. In this case, the base station may have the functions of the mobile station.

A radio frame may be composed of one or a plurality of frames in the time domain. Each of the one or plurality of frames in the time domain may be referred to as a subframe. A subframe may be further composed of one or a plurality of slots in the time domain. A subframe may be a fixed time length (for example, 1 ms) independent of numerology.

Numerology may be a communication parameter applied to at least one of transmission and reception of a certain signal or channel. Numerology may indicate at least one of, for example, SubCarrier Spacing (SCS), bandwidth, symbol length, cyclic prefix length, Transmission Time Interval (TTI), number of symbols per TTI, radio frame configuration, specific filtering processing performed by a transceiver in the frequency domain, specific windowing processing performed by a transceiver in the time domain, and the like.

A slot may be composed of one or a plurality of symbols (Orthogonal Frequency Division Multiplexing (OFDM) symbols, Single Carrier Frequency Division Multiple Access (SC-FDMA) symbols, etc.) in the time domain. A slot may be a time unit based on numerology.

A slot may include a plurality of mini-slots. Each mini-slot may be composed of one or a plurality of symbols in the time domain. Further, a mini-slot may be referred to as a sub-slot. A mini-slot may be composed of fewer symbols than a slot. PDSCH (or PUSCH) transmitted in a time unit larger than a mini-slot may be referred to as PDSCH (or PUSCH) mapping type A. PDSCH (or PUSCH) transmitted using a mini-slot may be referred to as PDSCH (or PUSCH) mapping type B.

A radio frame, a subframe, a slot, a mini-slot, and a symbol all represent a time unit for transmitting a signal. A radio frame, a subframe, a slot, a mini-slot, and a symbol may be referred to by other corresponding names.

For example, one subframe may be referred to as a Transmission Time Interval (TTI), a plurality of consecutive subframes may be referred to as a TTI, or one slot or one mini-slot may be referred to as a TTI. That is, at least one of a subframe and a TTI may be a subframe (1 ms) in existing LTE, may be a period shorter than 1 ms (for example, 1-13 symbols), or may be a period longer than 1 ms. Note that the unit representing TTI may be referred to as a slot, a mini-slot, or the like instead of a subframe.

Here, TTI refers to, for example, a minimum time unit of scheduling in radio communication. For example, in an LTE system, a base station performs scheduling of allocating radio resources (frequency bandwidth, transmission power, etc. that can be used in each user terminal) to each user terminal in TTI units. Note that the definition of TTI is not limited to this.

TTI may be a transmission time unit of a channel-coded data packet (transport block), code block, codeword, etc., or may be a processing unit of scheduling, link adaptation, etc. Note that when TTI is given, a time interval (for example, the number of symbols) in which a transport block, code block, codeword, etc. are actually mapped may be shorter than the TTI.

Note that when one slot or one mini-slot is referred to as TTI, one or more TTIs (that is, one or more slots or one or more mini-slots) may be the minimum time unit of scheduling. Further, the number of slots (number of mini-slots) constituting the minimum time unit of scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than the normal TTI may be referred to as a shortened TTI, a short TTI, a partial TTI (partial or fractional TTI), a shortened subframe, a short subframe, a mini-slot, a sub-slot, a slot, or the like.

Note that a long TTI (for example, a normal TTI, a subframe, etc.) may be replaced with a TTI having a time length exceeding 1 ms, and a short TTI (for example, a shortened TTI, etc.) may be replaced with a TTI having a TTI length less than the TTI length of the long TTI and 1 ms or more.

A resource block (RB) is a resource allocation unit in the time domain and the frequency domain, and may include one or a plurality of consecutive subcarriers in the frequency domain. The number of subcarriers included in an RB may be the same regardless of numerology, for example, 12. The number of subcarriers included in an RB may be determined based on numerology.

Further, the time domain of an RB may include one or a plurality of symbols, and may be the length of one slot, one mini-slot, one subframe, or one TTI. One TTI, one subframe, etc. may be composed of one or a plurality of resource blocks, respectively.

Note that one or a plurality of RBs may be referred to as a Physical RB (PRB), a Sub-Carrier Group (SCG), a Resource Element Group (REG), a PRB pair, an RB pair, or the like.

Further, a resource block may be composed of one or a plurality of Resource Elements (RE). For example, one RE may be a radio resource region of one subcarrier and one symbol.

A Bandwidth Part (BWP) (which may be referred to as a partial bandwidth or the like) may represent a subset of consecutive common RBs (common resource blocks) for a certain numerology in a certain carrier. Here, the common RB may be identified by an index of the RB based on a common reference point of the carrier. A PRB may be defined in a certain BWP and numbered within the BWP.

BWP may include BWP for UL (UL BWP) and BWP for DL (DL BWP). One or a plurality of BWPs may be configured in one carrier for a UE.

At least one of the configured BWPs may be active, and the UE does not have to assume transmitting or receiving a predetermined signal/channel outside the active BWP. Note that "cell", "carrier", etc. in the present disclosure may be replaced with "BWP".

The structures of the radio frame, subframe, slot, mini-slot, symbol, etc. described above are merely examples. For example, configurations such as the number of subframes included in a radio frame, the number of slots per subframe or radio frame, the number of mini-slots included in a slot, the number of symbols and RBs included in a slot or mini-slot, the number of subcarriers included in an RB, and the number of symbols, symbol length, Cyclic Prefix (CP) length, etc. in a TTI can be changed variously.

The terms "connected", "coupled", or any variation thereof means any direct or indirect connection or coupling between two or more elements, and may include the presence of one or more intermediate elements between two elements "connected" or "coupled" to each other. The coupling or connection between elements may be physical, logical, or a combination thereof. For example, "connection" may be replaced with "access". As used in the present disclosure, two elements may be considered to be "connected" or "coupled" to each other using at least one of one or more electric wires, cables, and printed electrical connections, and as some non-limiting and non-inclusive examples, using electromagnetic energy having wavelengths in the radio frequency region, microwave region, and light (both visible and invisible) region, etc.

A reference signal may be abbreviated as Reference Signal (RS), and may be referred to as a pilot (Pilot) depending on the standard applied.

As used in the present disclosure, the phrase "based on" does not mean "based only on" unless explicitly stated otherwise. In other words, the phrase "based on" means both "based only on" and "based at least on".

"Means" in the configuration of each device described above may be replaced with "unit", "circuit", "device", etc.

Any reference to elements using designations such as "first", "second", etc. used in the present disclosure does not generally limit the amount or order of those elements. These designations may be used in the present disclosure as a convenient method for distinguishing between two or more elements. Therefore, references to the first and second elements do not mean that only two elements can be adopted there, or that the first element must precede the second element in some way.

In the present disclosure, when "include", "including", and variations thereof are used, these terms are intended to be inclusive, similar to the term "comprising". Furthermore, the term "or" used in the present disclosure is intended not to be an exclusive OR.

In the present disclosure, for example, if articles are added by translation, such as a, an, and the in English, the present disclosure may include that nouns following these articles are plural.

The terms "determining" and "determining" used in the present disclosure may encompass a wide variety of operations. "Determining" and "determining" may include, for example, regarding judging, calculating, computing, processing, deriving, investigating, looking up, search, inquiry (for example, searching in a table, a database, or another data structure), ascertaining as "determining" and "determining". Further, "determining" and "determining" may include regarding receiving (for example, receiving information), transmitting (for example, transmitting information), input, output, accessing (for example, accessing data in a memory) as "determining" and "determining". Further, "determining" and "determining" may include regarding resolving, selecting, choosing, establishing, comparing, etc. as "determining" and "determining". That is, "determining" and "determining" may include regarding some operation as "determining" and "determining". Further, "determining (determining)" may be replaced with "assuming", "expecting", "considering", etc.

In the present disclosure, the term "A and B are different" may mean "A and B are different from each other". Note that the term may mean "A and B are different from C, respectively". Terms such as "separated", "coupled", etc. may also be interpreted similarly to "different".

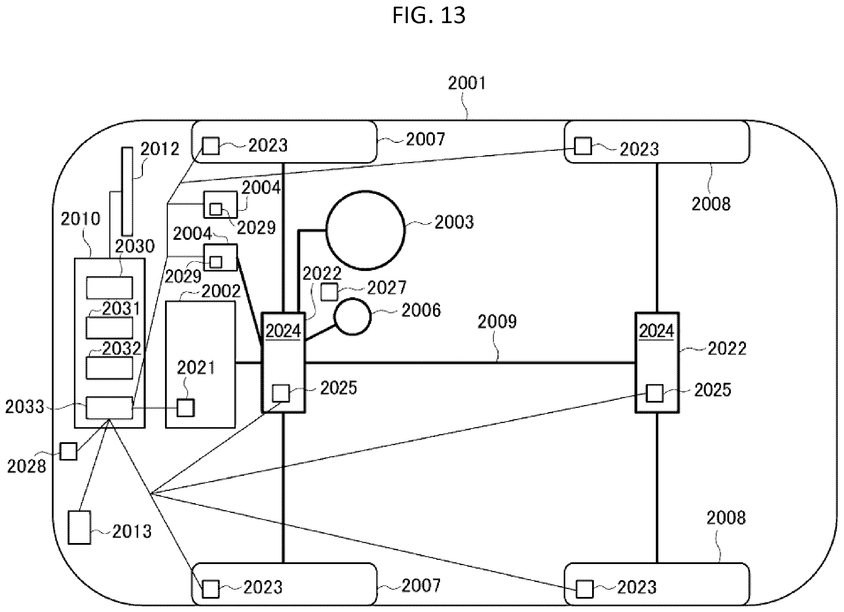

Fig. 13 is a diagram showing a configuration example of a vehicle 2001. As shown in Fig. 13, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is composed of, for example, an engine, a motor, or a hybrid of an engine and a motor.

The steering unit 2003 includes at least a steering wheel (also referred to as a handle), and is configured to steer at least one of the front wheels and the rear wheels based on the operation of the steering wheel operated by a user.

The electronic control unit 2010 is configured by a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be referred to as an ECU (Electronic Control Unit).

Signals from the various sensors 2021 to 2028 include a current signal from a current sensor 2021 that senses a current of the motor, a rotation speed signal of the front wheels or the rear wheels acquired by a rotation speed sensor 2022, an air pressure signal of the front wheels or the rear wheels acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, a shift lever operation signal acquired by a shift lever sensor 2027, a detection signal for detecting an obstacle, a vehicle, a pedestrian, etc. acquired by an object detection sensor 2028, and the like.

The information service unit 2012 is configured by various devices for providing (outputting) various information such as driving information, traffic information, and entertainment information, such as a car navigation system, an audio system, a speaker, a television, and a radio, and one or more ECUs for controlling these devices. The information service unit 2012 provides various multimedia information and multimedia services to occupants of the vehicle 2001 using information acquired from an external device via the communication module 2013 or the like.

The information service unit 2012 may include an input device (for example, a keyboard, a mouse, a microphone, a switch, a button, a sensor, a touch panel, etc.) that accepts input from the outside, or may include an output device (for example, a display, a speaker, an LED lamp, a touch panel, etc.) that performs output to the outside.

The driving assistance system unit 2030 is configured by various devices for providing functions for preventing accidents in advance or reducing the driving load of the driver, such as a millimeter wave radar, LiDAR (Light Detection and Ranging), a camera, a positioning locator (for example, GNSS, etc.), map information (for example, high definition (HD) map, autonomous vehicle (AV) map, etc.), a gyro system (for example, IMU (Inertial Measurement Unit), INS (Inertial Navigation System), etc.), an AI (Artificial Intelligence) chip, an AI processor, and one or more ECUs for controlling these devices. Further, the driving assistance system unit 2030 transmits and receives various information via the communication module 2013 to realize a driving support function or an autonomous driving function.

The communication module 2013 can communicate with the microprocessor 2031 and components of the vehicle 2001 via the communication port. For example, the communication module 2013 transmits and receives data via the communication port 2033 to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001.

The communication module 2013 is a communication device capable of being controlled by the microprocessor 2031 of the electronic control unit 2010 and communicating with an external device. For example, various information is transmitted and received to and from an external device via radio communication. The communication module 2013 may be inside or outside the electronic control unit 2010. The external device may be, for example, a base station, a mobile station, or the like.

The communication module 2013 may transmit at least one of the signals from the various sensors 2021 to 2028 input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that accepts input. For example, the PUSCH transmitted by the communication module 2013 may include information based on the above input.

The communication module 2013 receives various kinds of information (traffic information, signal information, Inter-vehicular distance information, etc.) transmitted from an external device and displays them to the information service unit 2012 provided in the vehicle. The information service unit 2012 may be called an output section that outputs information (For example, information is output to devices such as displays and speakers based on the PDSCH (or data/information decoded from the PDSCH) received by the communication module 2013) . The communication module 2013 also stores various information received from external devices in the memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like provided in the vehicle 2001.

### (Supplementary Note)

The above-described disclosure may be expressed as follows.

The first feature is a terminal comprising: a reception unit configured to receive a configuration message regarding a conditional handover; and a control unit configured to execute the conditional handover when an execution condition for the conditional handover is satisfied, wherein the control unit determines whether the execution condition is satisfied based on a threshold of an altitude at which the terminal is located and a quality threshold of a candidate cell of a handover destination.

The second feature is a terminal comprising: a reception unit configured to receive a configuration message regarding a conditional handover; and a control unit configured to execute the conditional handover when an execution condition for the conditional handover is satisfied, wherein the control unit determines whether the execution condition is satisfied based on information on a flight path of the terminal and a position of a candidate cell of a handover destination.

The third feature is a terminal comprising: a control unit configured to execute a conditional handover when an execution condition for the conditional handover is satisfied; and a transmission unit configured to transmit information including an altitude at which the terminal is located and a quality of a cell or a beam to a network when the conditional handover fails or a radio link failure occurs.

The fourth feature is a terminal comprising: a control unit configured to control cell transition of the terminal in accordance with mobility control by a lower layer; and a transmission unit configured to transmit a measurement report in the lower layer to a network, wherein the transmission unit transmits the measurement report including an altitude at which the terminal is located.

The fifth feature is the terminal according to the fourth feature, wherein the transmission unit transmits the measurement report including an altitude index associated with the altitude.

The sixth feature is a terminal comprising: a control unit configured to control cell transition of the terminal in accordance with mobility control by a lower layer; and a transmission unit configured to transmit a measurement report in the lower layer to a network, wherein the transmission unit transmits the measurement report based on an altitude at which the terminal is located.

The seventh feature is the terminal according to the sixth feature, wherein the control unit executes the cell transition when an execution condition based on a threshold of an altitude at which the terminal is located and a quality threshold of a candidate cell of a handover destination is satisfied.

The eighth feature is a terminal comprising: a control unit configured to control cell transition of the terminal in accordance with mobility control by a lower layer; and a transmission unit configured to transmit a measurement report in the lower layer to a network, wherein the control unit executes the cell transition based on information on a flight path of the terminal and a position of a candidate cell of a handover destination.

The ninth feature is a terminal comprising: a control unit configured to control cell transition of the terminal in accordance with mobility control by a lower layer; and a transmission unit configured to transmit information including an altitude at which the terminal is located and a quality of a cell or a beam to a network when the cell transition fails or a radio link failure occurs.

### DESCRIPTION OF REFERENCE NUMERALS

10 Radio communication system
20 NG-RAN
100, 100A to 100D gNB
200 UE
210 Radio signal transmission/reception unit
220 Amplifier unit
230 Modulation/demodulation unit
240 Control signal/reference signal processing unit
250 Encoding/decoding unit
260 Data transmission/reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotation speed sensor
2023 Air pressure sensor
2024 Vehicle speed sensor
2025 Acceleration sensor
2026 Brake pedal sensor
2027 Shift lever sensor
2028 Object detection sensor
2029 Accelerator pedal sensor
2030 Driving assistance system unit
2031 Microprocessor
2032 Memory (ROM, RAM)
2033 Communication port

## Claims

1. A terminal comprising:
a reception unit configured to receive a configuration message regarding a conditional handover; and
a control unit configured to execute the conditional handover when an execution condition for the conditional handover is satisfied,
wherein the control unit determines whether the execution condition is satisfied based on a threshold of an altitude at which the terminal is located and a quality threshold of a candidate cell of a handover destination.

2. A terminal comprising:
a reception unit configured to receive a configuration message regarding a conditional handover; and
a control unit configured to execute the conditional handover when an execution condition for the conditional handover is satisfied,
wherein the control unit determines whether the execution condition is satisfied based on information on a flight path of the terminal and a position of a candidate cell of a handover destination.

3. A terminal comprising:
a control unit configured to execute a conditional handover when an execution condition for the conditional handover is satisfied; and
a transmission unit configured to transmit information including an altitude at which the terminal is located and a quality of a cell or a beam to a network when the conditional handover fails or a radio link failure occurs.

4. A radio communication method in a terminal, the method comprising the steps of:
receiving a configuration message regarding a conditional handover;
executing the conditional handover when an execution condition for the conditional handover is satisfied; and
determining whether the execution condition is satisfied based on a threshold of an altitude at which the terminal is located and a quality threshold of a candidate cell of a handover destination.

5. A radio communication method in a terminal, the method comprising the steps of:
receiving a configuration message regarding a conditional handover;
executing the conditional handover when an execution condition for the conditional handover is satisfied; and
determining whether the execution condition is satisfied based on information on a flight path of the terminal and a position of a candidate cell of a handover destination.

6. A radio communication method in a terminal, the method comprising the steps of:
executing a conditional handover when an execution condition for the conditional handover is satisfied; and
transmitting information including an altitude at which the terminal is located and a quality of a cell or a beam to a network when the conditional handover fails or a radio link failure occurs.
